# EUROPÄISCHE PATENTANMELDUNG

(11) **EP 4 664 733 A1**
(43) Veröffentlichungstag der Anmeldung: **17.12.2025**
(21) Anmeldenummer: 25181546.0
(22) Anmeldetag: 09.06.2025
(51) Int. Cl.: H02K 11/40, H01R 39/26

(54) **ABLEITKÖRPER FÜR EIN WELLENERDUNGSELEMENT, WELLENERDUNGSELEMENT FÜR EINE ELEKTRISCHE MASCHINE MIT WENIGSTENS EINEM SOLCHEN ABLEITKÖRPER UND FAHRZEUG UND/ODER GENERATOR MIT EINER ELEKTRISCHEN MASCHINE**

(30) Priorität: 10.06.2024 DE 102024001900
(71) Anmelder: KACO GmbH + Co. KG, 74912 Kirchardt (DE)
(72) Erfinder: MÜLLER, Alexander, 69115 Heidelberg (DE)

(57) **Zusammenfassung**

Die Erfindung betrifft einen Ableitkörper für ein Wellenerdungselement, mit einem ringförmigen Grundkörper, der mindestens ein mit einer Kontaktfläche versehenes Ableitelement aufweist, wobei das Ableitelement über mindestens einen Gelenkarm derart mit dem Grundkörper verbunden ist, dass das Ableitelement nur radial relativ zum Grundkörper bewegbar ist.

## Beschreibung

Die Erfindung betrifft einen Ableitkörper für ein Wellenerdungselement nach dem Oberbegriff des Anspruches 1, ein Wellenerdungselement für eine elektrische Maschine mit wenigstens einem solchen Ableitkörper nach Anspruch 22 und ein Fahrzeug und/oder Generator mit einer elektrischen Maschine nach Anspruch 23.

Um elektrische Ladungen bzw. Spannungen / Ströme von Wellen elektrischer Antriebe in Fahrzeugen oder Generatoren in Windkraftanlagen und dgl. abzuleiten, werden ringförmige Wellenerdungselemente eingesetzt, deren Ableitelemente aus Filamenten bestehen, die von einem ringförmigen Grundkörper in Form eines Gehäuses radial nach innen ragen und in der Einbaulage an der Welle unter elastischer Verformung anliegen. Der Grundkörper ist elektrisch leitend mit einem geerdeten Bauteil verbunden. Der Einsatz der leitfähigen Filamente als Ableitelemente führt zu einer aufwändigen und teuren Fertigung des Wellenerdungselementes. Darüber hinaus besteht die Gefahr, dass sich die Filamente lösen und zu einer Verunreinigung und ggf. zu Schäden des gesamten Systems bis hin zu einem Gesamtausfall führen.

Die elektrisch leitenden Filamente haben häufig eine zu geringe elektrische Leitfähigkeit zwischen der rotierenden Welle und dem geerdeten Bauelement infolge zu hoher Widerstände. Außerdem besteht die Gefahr, dass die Filamente brechen und dadurch Dichtungen beschädigen oder gar zerstören. Problematisch ist auch der Einsatz der Filamente bei Drehrichtungswechsel der Welle, da die Filamente die Drehrichtungsumkehr nur schwierig durch entsprechende Verstellung nachvollziehen können.

Andere bekannte Ableitkörper sind als Ringscheiben ausgebildet, deren radial innerer Bereich unter axialer elastischer Verformung an der Welle anliegt. Aufgrund der axialen elastischen Verformung solcher Ableitkörper hat der Wellenerdungsring eine entsprechend große axiale Erstreckung. Die Einbauräume für solche Wellenerdungsringe werden im Zuge der technischen Entwicklung immer kleiner, so dass es schwierig wird, solche Wellenerdungselemente einzubauen.

Der Erfindung liegt die Aufgabe zugrunde, den gattungsgemäßen Ableitkörper und das Wellenerdungselement so auszubilden, dass eine einfache und kostengünstige Fertigung möglich ist und der Einbau auch in solche Einbauräume möglich ist, für die nur eine geringe axiale Einbaulänge zur Verfügung steht.

Diese Aufgabe wird beim gattungsgemäßen Ableitkörper erfindungsgemäß mit den kennzeichnenden Merkmalen des Anspruches 1 und beim Wellenerdungselement mit den Merkmalen des Anspruches 22 und beim Fahrzeug und/oder Generator mit den Merkmalen des Anspruches 23 gelöst.

Beim erfindungsgemäßen Ableitkörper ist das Ableitelement über den wenigstens einen Gelenkarm mit dem Grundkörper verbunden. Dabei ist die Verbindung so gestaltet, dass das Ableitelement nur radial gegenüber dem Grundkörper beweglich ist. Unter "nur radial" ist auch zu verstehen, dass das Ableitelement bei seiner Bewegung relativ zum Grundkörper geringe axiale Bewegungen ausführen kann. Wesentlich ist, dass sich das Ableitelement hauptsächlich in radialer Richtung relativ zum Grundkörper bewegt. Durch diese radiale Beweglichkeit des Ableitelementes wird erreicht, dass die axiale Breite des Ableitkörpers sehr klein gehalten werden kann, so dass der Ableitkörper einfach in Einbauräume eingebaut werden kann, in denen nur eine geringe axiale Einbaulänge zur Verfügung steht.

Die radiale Beweglichkeit des Ableitelements relativ zum Grundkörper ermöglicht eine einfache Montage des Ableitkörpers auf dem Maschinenelement, das in der Regel eine Welle ist. Beim Einschieben des Maschinenelementes in den Ableitkörper wird das Ableitelement radial nach außen bewegt, indem der Gelenkarm eine entsprechende Bewegung relativ zum Grundkörper ausführt. In der Einbaulage wird das Ableitelement unter der Kraft des ausgelenkten Gelenkarmes radial nach innen belastet, so dass es sicher am Maschinenelement anliegt und die Ladungen bzw. Spannungen/Ströme vom Maschinenelement ableiten kann. Durch eine entsprechende Formgestaltung des Gelenkarmes lässt sich die Anpresskraft des Ableitelementes an den Einsatzfall des Ableitkörpers anpassen.

Vorteilhaft ist der Gelenkarm über eine Gelenkstelle an den Grundkörper angeschlossen. Dadurch kann der Gelenkarm sicher gegenüber dem Grundkörper bewegt werden, um dem Ableitelement die Radialbewegung gegenüber dem Grundkörper zu ermöglichen.

Diese Gelenkstelle kann in vorteilhafter Weise dadurch erzeugt werden, dass im Anschlussbereich des Gelenkarmes an den Grundkörper ein in Umfangsrichtung des Grundkörpers verschwächter bzw. geschwächter Materialabschnitt gebildet wird. Dies kann beispielsweise durch entsprechende Durchbrüche im Grundkörper im Bereich der Anbindung des Gelenkarmes einfach erreicht werden.

Der Gelenkarm ist bei einer vorteilhaften Ausführungsform in einer Radialebene des Grundkörpers elastisch biegbar. In Verbindung mit der Gelenkstelle am Übergang zum Grundkörper ergibt sich dadurch eine einfache Möglichkeit, das Ableitelement in Radialrichtung innerhalb des ringförmigen Grundkörpers zu verstellen. Die elastische Biegbarkeit sorgt dafür, dass in der Einbaulage auf das Ableitelement durch den elastisch gebogenen Gelenkarm eine Kraft in radialer Richtung ausgeübt wird, durch welche das Ableitelement gegen das Maschinenelement gedrückt wird.

Um die Bewegung des Gelenkarmes relativ zum Grundkörper in konstruktiv einfacher Weise zu ermöglichen, verläuft der Gelenkarm vorteilhaft über seine Länge gekrümmt. Infolge dieser Krümmung wird der Gelenkarm zuverlässig so verformt, dass das Ableitelement die notwendige Radialverstellung ausführen kann.

Um eine einfache und kostengünstige Fertigung zu ermöglichen, ist der Gelenkarm in vorteilhafter Weise einstückig mit dem Grundkörper ausgebildet. Eine zusätzliche Montage des Gelenkarmes ist damit nicht erforderlich.

Weiter ist es vorteilhaft, wenn der Gelenkarm auch einstückig mit dem Ableitelement ausgebildet ist. Dann besteht der gesamte Ableitkörper nur aus einem einzigen Bauteil, das eine einfache, kostengünstige Fertigung ermöglicht, wobei Einzelteile des Ableitkörpers nicht gesondert montiert werden müssen.

Bei einer vorteilhaften Ausführungsform weist das Ableitelement einen blockförmigen Kontaktteil auf, an den der Gelenkarm anschließt. Die blockförmige Ausbildung des Kontaktteiles ermöglicht einen großflächigen Kontaktbereich zwischen dem Ableitelement und dem Maschinenelement.

Vorteilhaft ist der Kontaktteil mit der Kontaktfläche versehen, was zu einer einfachen und kostengünstigen Fertigung des Ableitkörpers beiträgt.

Um einen guten Kontakt zwischen dem Ableitelement und dem Maschinenelement zu erreichen, erstreckt sich das Ableitelement vorteilhaft in Umfangsrichtung des Grundköpers.

Der Ableitkörper ist in vorteilhafter Weise über zwei Gelenkarme an den Grundköper angebunden. Dadurch ist es möglich, dass das Ableitelement eine lineare Radialbewegung relativ zum Grundkörper ausführen kann.

Hierbei sind in vorteilhafter Weise die beiden Gelenkarme entgegengesetzt zueinander über ihre Länge gekrümmt verlaufend ausgebildet. Dies ermöglicht es, dass beide Gelenkarme bei der Radialbewegung des Ableitelementes zuverlässig elastisch verformt werden können. Mit den beiden Gelenkarmen kann ein entsprechend hoher Anpressdruck erzeugt werden, unter dem das Ableitelement am Maschinenelement anliegt. Die entgegengesetzt gekrümmte Ausbildung führt dazu, dass die beiden Gelenkarme entgegengesetzt zueinander elastisch verformt werden, wenn das Ableitelement seine Radialbewegung ausführt.

Bei einer vorteilhaften Ausführungsform haben der Grundkörper und/oder das Ableitelement und/oder der Gelenkarm derart gleiche axiale Breite, dass ihre Seitenflächen jeweils in einer Radialebene des Grundkörpers liegen. Der Ableitkörper hat somit konstante axiale Dicke, was zu einer einfachen und kostengünstigen Fertigung in vorteilhafter Weise beiträgt.

Bei einer vorteilhaften Ausführungsform ist es möglich, dass die Kontaktfläche mit Strukturen zum Abstreifen von Medien aus dem Kontaktbereich und/oder zum Aufbau eines Mediumfilms versehen ist. Damit können die Ableitelemente außer ihrer Ableitfunktion weitere Funktionen erfüllen. So können die Strukturen zum Abstreifen von Medien aus dem Kontaktbereich sicherstellen, dass zwischen dem Maschinenelement und der Kontaktfläche eine einwandfreie Kontaktierung zur Ableitung der elektrischen Ladungen/Spannungen gewährleistet ist. Die Strukturen sorgen dafür, dass bei rotierendem Maschinenelement das Medium aus dem Kontaktbereich axial nach außen verdrängt wird.

Die Strukturen können auch so ausgebildet sein, dass sie zum aktiven Aufbau eines Mediumfilms im Kontaktbereich herangezogen werden können. Der Aufbau eines solchen Mediumfilms sorgt dafür, dass der Verschleiß der Kontaktfläche aufgrund des Mediumfilms gering gehalten wird. Die Dicke dieses Mediumfilms ist so vorgesehen, dass die Ableitfunktion des Ableitkörpers nicht beeinträchtigt wird.

Um den Anpressdruck des Ableitelementes am Maschinenelement zu erhöhen, ist es in vorteilhafter Weise möglich, das Ableitelement durch wenigstens ein zusätzliches Druckelement in Radialrichtung zu belasten. Dadurch wird das Ableitelement nicht nur durch den elastisch verformten Gelenkarm, sondern auch durch das Druckelement in Radialrichtung belastet. Mit dem Druckelement ist es in einfacher Weise möglich, die Anpresskraft optimal an den Anwendungsfall anzupassen.

Eine einfache und vorteilhafte Gestaltung ergibt sich, wenn sich das Druckelement am Grundkörper und am Ableitkörper abstützt. Das Druckelement befindet sich somit in dem radialen Zwischenraum zwischen dem äußeren ringförmigen Grundkörper und dem vom Grundkörper mit Abstand umgebenen Ableitelement. Durch die unmittelbare Abstützung am Grundkörper und am Ableitelement sind für das Druckelement keine gesonderten Halte- oder Abstützteile erforderlich, was zu einer einfachen und kostengünstigen Herstellung beiträgt.

Ein solches Druckelement kann beispielsweise eine Druckfeder sein, die sich mit einem Ende an der Innenseite des Grundkörpers und mit ihrem anderen Ende am Ableitelement abstützt. Der Durchmesser einer solchen Druckfeder ist vorteilhaft so gewählt, dass sie nicht über die axialen Seitenflächen des Ableitkörpers vorsteht.

Eine solche Druckfeder ist beispielsweise eine Schraubendruckfeder, die vorteilhaft aus Metall besteht.

Als weitere Möglichkeit einer Druckfeder kann eine zylindrische Metallfeder vorteilhaft eingesetzt werden. Sie befindet sich so zwischen dem Grundkörper und dem Ableitelement, dass diese an der Außenwand der zylindrischen Metallfeder anliegen. Bei der Radialbewegung des Ableitelementes wird darum die zylindrische Metallfeder elastisch zusammengedrückt, wodurch die zusätzliche Anpresskraft auf das Ableitelement ausgeübt wird.

Bei einer weiteren vorteilhaften Ausführungsform ist zumindest die Kontaktfläche von einer Folie bedeckt. Sie kann in vorteilhafter Weise auch über die gesamte Innenseite des Ableitelementes und des Grundkörpers vorgesehen sein.

Die Folie kann leitfähig oder auch nicht leitfähig sein. Wird eine leitfähige Folie eingesetzt, die eine höhere Leitfähigkeit als das Material des Ableitelements aufweist, wird dadurch der Kontaktwiderstand verringert.

Auch nichtleitfähige Folien bzw. dielektrisch wirksame Folien können zusätzlich verwendet werden. Diese Folien besitzen hohe Durchschlagfestigkeit und geringe Verlustfaktoren, was sie ideal für den Einsatz für eine funktional wirksame kapazitive Kopplung macht. Typische Materialien für dielektrische Folien sind:
Polyethylen (PE): Hohe Isolationsfestigkeit, niedriger Verlustfaktor.
Polypropylen (PP): Hohe Isolationsfestigkeit, sehr niedriger Verlustfaktor, hohe Temperaturbeständigkeit.
Polytetrafluorethylen (PTFE): Sehr hohe Isolationsfestigkeit, niedriger Verlustfaktor, chemisch inert und temperaturbeständig.
Polyester (PET): Gute mechanische Eigenschaften, moderate Isolationsfestigkeit, niedriger Verlustfaktor.

Wie bereits erwähnt, können die oben aufgeführten Materialien zur Erzeugung eines Kondensators mit einem kapazitiven Effekt bzw. zur Ausbildung einer kapazitiven Kopplung verwendet werden, wobei die Folien als Dielektrikum eingesetzt werden, um die elektrischen Ladungen zu trennen und die Kapazität zu erhöhen.

Bei einer weiteren vorteilhaften Ausführungsform ist zumindest die Kontaktfläche mit einer Beschichtung versehen. Je nach Art dieser Beschichtung können unterschiedliche Funktionen dem Ableitkörper zugefügt werden. Die Beschichtung kann auch über den gesamten Innenumfang des Ableitelementes und des Grundkörpers vorhanden sein.

Ist die Beschichtung leitfähig gestaltet, dann kann durch sie der Kontaktwiderstand verringert werden, was zu einer guten Ableitung der elektrischen Ladungen führt. Für solche leitfähigen Beschichtungen kommen beispielsweise Silberlack, Graphit, Glaskohle oder allgemein metallische Lacke in Betracht.

Wird eine nicht leitfähige Beschichtung verwendet, die beispielsweise aus DLC, aus Keramik oder aus PTFE besteht, dann wird zwischen dem Ableitelement und dem Maschinenelement eine Art Kondensator ausgebildet, der eine funktional wirksame kapazitive Kopplung ausbildet und zu einer Reduktion der Spannung vom Maschinenelement gegenüber dem geerdeten Gehäuse führt. Die Schichtdicke kann hier kleiner 1 µm, aber auch bis zu etwa 100 µm betragen.

Die Beschichtung kann auch im Hinblick auf eine Verschleißminderung im Kontaktbereich verwendet werden. In diesem Falle wird ein hartes Material für die Beschichtung eingesetzt, das z.B. DLC, Hartmetall oder Keramik ist.

Die Beschichtung kann darüber hinaus auch so gewählt werden, dass eine Reibungs- und Verschleißminderung im Kontaktbereich zwischen dem Ableitelement und dem Maschinenelement erreicht wird. Für einen solchen Fall kann die Beschichtung aus einem Material mit schmierenden Eigenschaften bestehen, wie z. B. aus Molybdändisulfid (MoS₂), Graphit, Metall-Graphit-Kompositbeschichtungen oder graphenhaltigem Material.

Bei einer weiteren vorteilhaften Ausgestaltung sind in der Kontaktfläche Partikel eingelagert. Solche Partikel können im Hinblick auf unterschiedliche Funktionen eingesetzt werden. So können die Partikel im Hinblick auf eine Verschleißminderung ausgewählt werden. In diesem Falle kommen verschleißfeste Partikel in Betracht, wie Glasfasern, Glaskugeln, Keramiken und dgl. in Betracht.

Zu einem verringerten Verschleiß kann auch beitragen, wenn das Ableitelement im Bereich der Kontaktfläche gehärtet ausgebildet ist.

Eine weitere vorteilhafte Möglichkeit für die Beschichtung besteht darin, hochleitfähige Partikel in die Kontaktfläche einzuarbeiten, wie z.B. Silberpartikel, Kupferpartikel, metallische Partikel oder dgl. Mit ihnen wird eine verringerte Impedanz erreicht, die zu einer zuverlässigen und einwandfreien Ableitung der Ladungen vom Maschinenelement beiträgt.

Schließlich kann die Beschichtung aus leitfähigen Schmierstoffen bestehen, wie beispielsweise Graphit, Graphen, Molybdänsulfid, Edelmetalle und dgl.

Die Festschmierstoffe können auch nichtleitfähig ausgebildet sein, z.B. können sie aus PTFE oder Keramiken bestehen.

Besonders bevorzugt wird eine mehrlagige Beschichtung, die abwechselnde Lagen von leitfähigen und nichtleitfähigen Materialien verwendet. Der mehrschichtige Aufbau hat vorteilhafterweise verbesserte elektrische und mechanische Eigenschaften.

Beispielhaft kann ein Aufbau nachfolgende Struktur aufweisen und einen Kondensator bzw. eine kapazitive Kopplung ausbilden:
A) Leitfähige Schicht
   Materialien: Metalllack, wie Silberlack oder Kupferlack, Graphit, Glaskohle
   Eigenschaften: Niedriger spezifischer Widerstand, hohe Leitfähigkeit
B) Nichtleitfähige (Dielektrische) Schicht
   Materialien: Polyethylen (PE), Polypropylen (PP), Polytetrafluorethylen (PTFE), Polyester (PET)
   Eigenschaften: Hohe Durchschlagfestigkeit, niedriger Verlustfaktor
   Funktion: Elektrische Isolierung, mechanische Stabilität, Schutz der leitfähigen Schichten
C) Leitfähige Schicht
   Materialien: Metalllack, wie Silberlack oder Kupferlack, leitfähiger Gummi, Nickel, Aluminium
   Eigenschaften: Flexibilität, Korrosionsbeständigkeit
   Funktion: Verbesserung der mechanischen Eigenschaften und zusätzliche Leitfähigkeit
D) Nichtleitfähige (Dielektrische) Schicht
   Materialien: Polyimid (PI), Epoxidharz
   Eigenschaften: Temperaturbeständigkeit, chemische Beständigkeit
   Funktion: Schutz vor Umwelteinflüssen, zusätzliche Isolierung

Damit beim Einschieben des Maschinenelementes in den Ableitkörper Axialbewegungen des Ableitelementes verhindert werden, ist in vorteilhafter Weise das Ableitelement mit wenigstens einem Axialanschlag versehen, der bei der Montage des Ableitkörpers an wenigstens einem Gegenanschlag anliegt, der am Grundkörper gehalten ist. Dieser Gegenanschlag verhindert im Zusammenwirken mit dem Axialanschlag, dass eine unerwünschte axiale Auslenkung des Ableitelementes beim Montagevorgang stattfindet.

Ein solcher Axialanschlag kann beispielsweise durch einen radialen Vorsprung des Ableitelementes gebildet sein, der an der von der Kontaktfläche abgewandten Seite des Ableitelementes vorgesehen ist.

Der Gegenanschlag ist vorteilhaft fest mit dem Grundkörper verbunden.

Es besteht auch die Möglichkeit, den Gegenanschlag lösbar am Grundkörper anzuordnen.

Nimmt der Ableitkörper seine Einbaulage ein, dann lässt sich der Gegenanschlag einfach vom Grundkörper abnehmen.

Je nach Zahl der Ableitelemente ist eine entsprechende Zahl von Gegenanschlägen am Ableitkörper vorgesehen.

Bei einer weiteren vorteilhaften Ausbildung sind über den Umfang des Grundkörpers mehrere Ableitelemente mit Abstand hintereinander angeordnet. Zumindest zwischen zwei benachbarten Ableitelementen befindet sich wenigstens ein Abstreifer, der sich vom Grundkörper aus radial nach innen erstreckt. Der Abstreifer ist hierbei so lang, dass er in der Einbaulage des Ableitkörpers am Maschinenelement anliegt und dort evtl. Verschmutzungen oder auch Medien vom Maschinenelement bei dessen Drehung abstreifen kann. Dadurch ist sichergestellt, dass ein einwandfreier Kontakt zwischen dem Ableitelement und dem Maschinenelement gewährleistet ist.

Vorteilhaft ist es, wenn über den Umfang des Grundkörpers mehrere Ableitelemente mit Abstand hintereinander angeordnet sind und zumindest zwischen zwei benachbarten Ableitelementen wenigstens ein Verdrehsicherungselement liegt, das sich vom Grundkörper aus radial nach innen erstreckt.

Das Verdrehsicherungselement verhindert bei der Montage des Ableitkörpers, dass die Ableitelemente in tangentialer Richtung verdreht werden. Ein solches tangentiales Mitschleppen des Ableitelementes kann z. B. durch äußere Einflüsse, wie z. B. Eisbildung oder Ähnlichem, auftreten. Das Verdrehsicherungselement verhindert dies in konstruktiv einfacher und zuverlässiger Weise. Das Verdrehsicherungselement ist in der Einbaulage des Ableitkörpers nicht in Kontakt mit dem drehenden Maschinenelement.

Das erfindungsgemäße Wellenerdungselement zeichnet sich dadurch aus, dass es mit wenigstens einem erfindungsgemäßen Ableitkörper versehen ist.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsformen näher erläutert. Es zeigen
- Fig. 1: in Ansicht einen erfindungsgemäßen Ableitkörper,
- Fig. 2: einen Ausschnitt B der Fig. 1 in vergrößerter Darstellung,
- Fig. 3: in schematischer Darstellung das Aufziehen des erfindungsgemäßen Ableitkörpers auf eine Welle,
- Fig. 4: in perspektivischer Darstellung eine weitere Ausführungsform eines erfindungsgemäßen Ableitkörpers,
- Fig. 5: in vergrößerter und perspektivischer Darstellung einen Teil des Ableitkörpers gemäß Fig. 4,
- Fig.6 bis 10: jeweils in Ansicht und vergrößerter Darstellung einen Teil von weiteren Ausführungsformen des erfindungsgemäßen Ableitkörpers,
- Fig. 11: in vergrößerter Darstellung und in Vorderansicht einen Teil einer weiteren Ausführungsform des erfindungsgemäßen Ableitkörpers,
- Fig. 12: den Ableitkörper gemäß Fig. 11 in Rückansicht,
- Fig.13: in perspektivischer Darstellung eine weitere Ausführungsform eines erfindungsgemäßen Ableitkörpers,
- Fig. 14: in vergrößerter Darstellung und im Halbaxialschnitt den Ableitkörper gemäß Fig. 13,
- Fig. 15 bis 17: jeweils in Ansicht und in vergrößerter Darstellung einen Teil von weiteren Ausführungsformen des erfindungsgemäßen Ableitkörpers.

Die nachfolgend beschriebenen Ableitkörper sind so ausgebildet, dass die Ableitelemente des Ableitkörpers beim Einschieben der Welle sich nicht axial, sondern radial bewegen. Dadurch benötigen die Ableitkörper in Axialrichtung nur einen geringen Einbauraum, so dass Wellenerdungselemente mit solchen Ableitkörpern optimal dort eingebaut werden können, wo nur wenig Einbauraum zur Verfügung steht.

Unter der radialen Bewegung der Ableitelemente ist zu verstehen, dass die Hauptbewegungsrichtung in Radialrichtung erfolgt, dass aber geringfügige axiale Abweichungen möglich sein können. Sie sind allerdings im Vergleich zu den bekannten Ableitkörpern sehr gering.

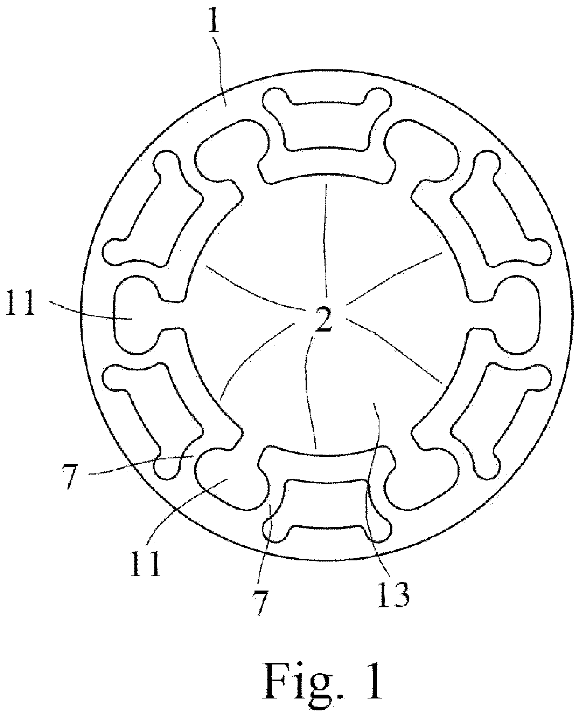

**Fig. 1** zeigt einen Ableitkörper mit einem ringförmigen Grundkörper 1, von dem radial nach innen Ableitelemente 2 abstehen. Im dargestellten Ausführungsbeispiel sind sie gleich ausgebildet und haben in Umfangsrichtung Abstand voneinander. Um eine gleichmäßige Ableitung der Spannungen/Ladungen zu erreichen, haben die Ableitelemente 2 in vorteilhafter Weise gleiche Abstände voneinander.

Der Grundkörper 1 mit den Ableitelementen 2 ist vorteilhaft einstückig ausgebildet und besteht aus elektrisch leitfähigem Material, wie beispielsweise einem Metall, bevorzugt Kupfer oder Aluminium. Alternativ kann der Grundkörper 1 mit den Ableitelementen 2 auch aus Glaskohle, Graphit oder einer Metall-Legierung mit hoher elektrischer Leitfähigkeit ausgebildet sein.

Es können auch elektrisch leitfähige Polymere, wie beispielsweise Polyanilin, Polythiophen oder Polypyrrol oder ein elektrisch leitfähiger Gummi Verwendung finden. Diese Materialien gewährleisten eine effiziente und gleichmäßige Ableitung der Spannungen oder Ladungen, wie sie für den beschriebenen Grundkörper 1 mit den Ableitelementen 2 erforderlich sind.

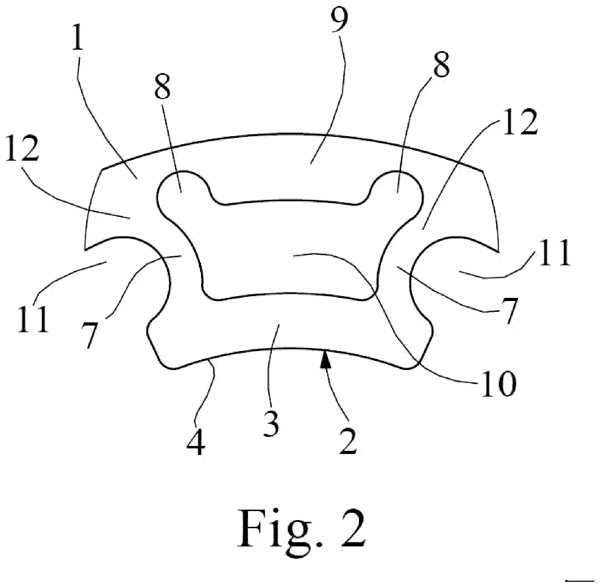

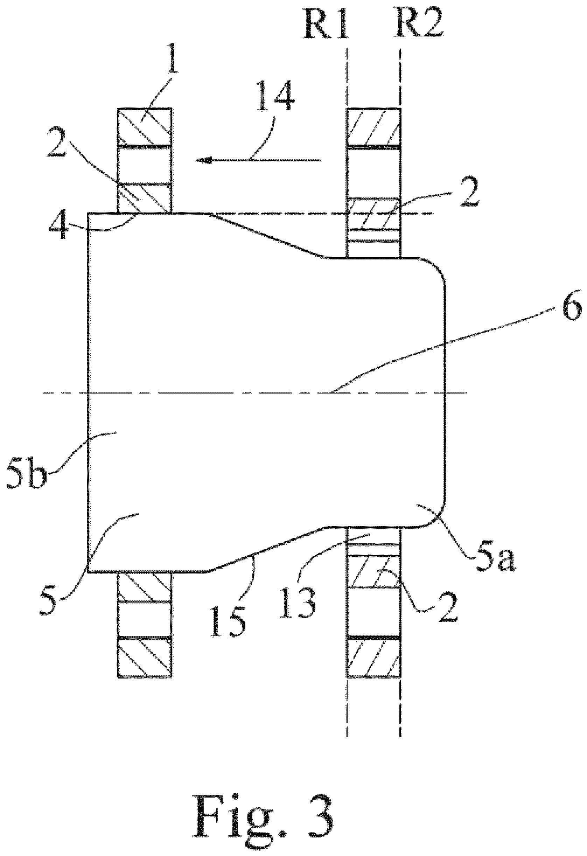

Anhand von Fig. 2 werden die Ableitelemente 2 näher beschrieben. Sie haben einen Kontaktteil 3, der mit einer Kontaktfläche 4 versehen ist, die in der Einbaulage des Grundkörpers 1 bzw. der Ableitelemente 2 an einem die elektrischen Ladungen aufweisenden Maschinenelement 5 (Fig. 3) anliegt.

Im Ausführungsbeispiel ist es eine Welle, die um ihre Achse 6 drehbar angetrieben wird. Die Kontaktfläche 4 ist vorteilhaft so ausgebildet, dass sie flächig am Maschinenelement 5 anliegt.

Der Kontaktteil 3 ist gelenkig mit dem Grundkörper 1 verbunden. Hierfür sind zwei Gelenkarme 7 vorgesehen, die nahe den beiden in Umfangsrichtung liegenden Enden des Kontaktteiles 3 vorgesehen sind und den Kontaktteil 3 in radialem Abstand zum ringförmigen Grundkörper 1 halten. Die beiden Gelenkarme 7 sind vorteilhaft entgegengesetzt zueinander über ihre radiale Länge gebogen ausgebildet, so dass sie bei der noch zu beschreibenden Montage des Ableitkörpers einfach elastisch gebogen werden können. Die Gelenkarme 7 haben in Umfangsrichtung des Ableitkörpers Abstand voneinander und sind über ihre Länge in Umfangsrichtung nach innen gebogen.

Am Übergang der Gelenkarme 7 in den Grundkörper 1 sind im Grundkörper 1 Vertiefungen 8 vorgesehen, die den Grundkörper 1 axial durchsetzen. Dadurch hat der Grundkörper 1 im Bereich der Vertiefungen 8 kleinere radiale Dicke als im Bereich zwischen den Vertiefungen 8.

Die Vertiefungen 8 sind durch einen in Umfangsrichtung verlaufenden Steg 9 voneinander getrennt, der mit Abstand dem Kontaktteil 3 radial gegenüberliegt und an der Innenseite des Grundkörpers 1 vorgesehen ist. Der Steg 9 verleiht dem Grundkörper 1 im Bereich zwischen den Gelenkarmen 7 eine ausreichende Festigkeit.

Der Kontaktteil 3, die Gelenkarme 7 und der Steg 9 begrenzen eine Durchtrittsöffnung 10, die etwa trapezförmigen Umriss hat und im Bereich der Vertiefungen 8 radial nach außen erweitert ist.

Wie aus Fig. 1 hervorgeht, begrenzen die Gelenkarme 7 benachbarter Ableitelemente 2 die Durchtrittsöffnungen 11, welche radial nach innen offen sind. Die Durchtrittsöffnungen 11 werden von den gebogenen Gelenkarmen 7, den Enden der Kontaktteile 3 und dem Grundkörper 1 begrenzt. Aufgrund der gebogenen Gestaltung der Gelenkarme 7 haben die Durchtrittsöffnungen 11 etwa ovalen Umriss.

Die Kontaktflächen 4 sämtlicher Ableitelemente 2 liegen auf einem gemeinsamen Durchmesser, so dass die Kontaktflächen 4 am Umfang des Maschinenelementes 5 jeweils flächig anliegen.

Es ist auch denkbar, dass nur jede zweite oder dritte Kontaktfläche 4, somit jedes zweite oder dritte Ableitelement 2, auf einem gemeinsamen Durchmesser liegen, so dass nicht alle die Kontaktflächen 4 am Umfang des Maschinenelementes 5 jeweils flächig anliegen.

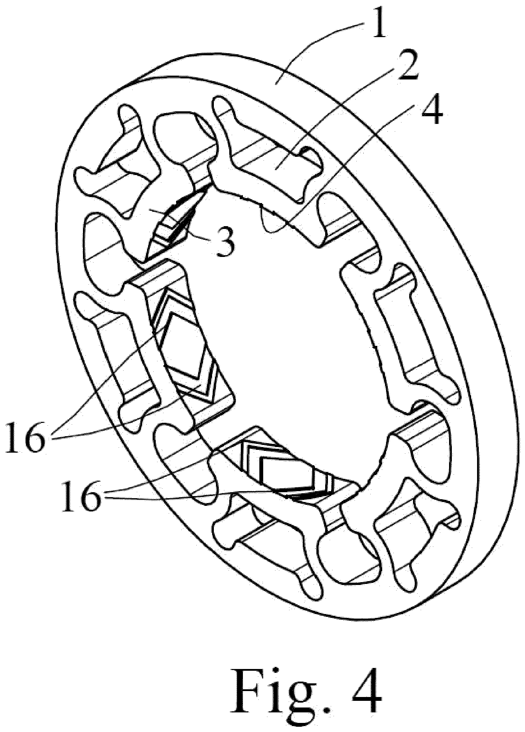

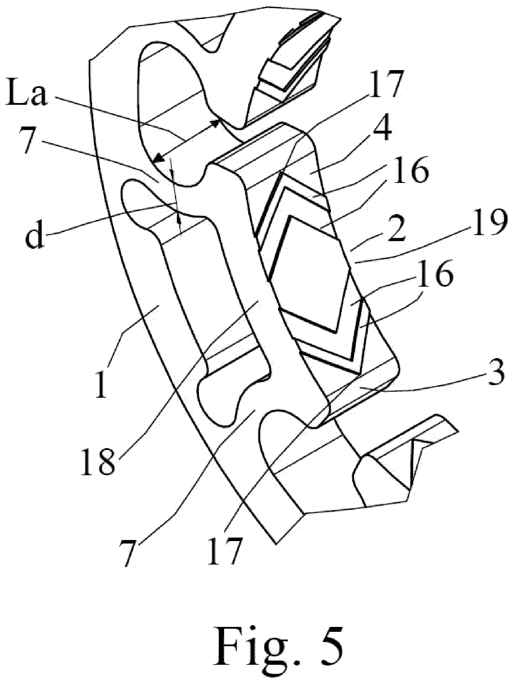

Der Grundkörper 1, die Ableitelemente 2 und die Gelenkarme 7 haben gleiche axiale Breite (Fig. 4 und 5), d. h. die Seitenflächen dieser Teile liegen jeweils in einer Radialebene R1 und R2 (Fig. 3).

Außerdem ist der Grundkörper 1 zusammen mit den Ableitelementen 2 einstückig ausgebildet. Dies ermöglicht eine sehr einfache und kostengünstige Fertigung. Die Einstückigkeit ermöglicht es beispielsweise, den Grundkörper 1 als Ganzes aus einem Ausgangsmaterial herzustellen. Als Fertigungsverfahren kommen beispielhaft Stanzen, Laserschneiden, Wasserstrahlschneiden, Fräsen und dgl. in Betracht. Hierdurch wird auch eine nahtlose und einheitliche Struktur gewährleistet, welche die gleichmäßige Ableitung der Spannungen oder Ladungen ermöglicht.

Besonders bevorzugt wird der Grundkörper 1 durch ein Strangpressverfahren bzw. Extrusion oder auch durch ein kontinuierliches Extrusionsverfahren hergestellt. Extrusion ist ein weit verbreitetes Verfahren in der Metall- und Kunststoffverarbeitung, bei dem Material durch eine formgebende Öffnung gepresst wird, um kontinuierliche Profile mit konstanter Querschnittsform zu erzeugen. Geeignete Kunststoffe für das Strangpressverfahren sind: Polyethylen (PE), Polypropylen (PP), Polyvinylchlorid (PVC), Polyamid (PA) Polyethylenterephthalat (PET). Diese Kunststoffe können mit leitfähigen Füllstoffen oder Additiven kombiniert werden, um die notwendige elektrische Leitfähigkeit zu erreichen. Alternativ können auch Metalle oder Keramiken verwendet werden.

Die Vertiefungen 8 führen dazu, dass der Anschlussbereich der Gelenkarme 7 an den Grundkörper 1 als Gelenkstellen 12 wirkt.

**Fig. 3** zeigt beispielhaft, wie der Ableitkörper auf dem Maschinenelement 5 montiert wird. Es hat beispielhaft einen im Außendurchmesser kleineren Abschnitt 5a und einen im Außendurchmesser größeren Abschnitt 5b.

Das Maschinenelement 5 wird in den Grundkörper 1 geschoben. Dabei kommen seine Ableitelemente 2 zunächst in den Bereich des kleineren Abschnittes 5a. Der Außendurchmesser des Abschnittes 5a ist kleiner als der durch die Kontaktflächen 4 der Ableitelemente 2 gebildete Durchmesser einer zentralen Öffnung 13 des Grundkörpers 1. Dadurch lässt sich das Maschinenelement 5 sehr einfach durch den Grundkörper 1 bzw. die Ableitelemente 2 schieben.

Beim weiteren Verschieben in Pfeilrichtung 14 gelangen die Ableitelemente 2 auf eine Kegelfläche 15, welche die beiden Abschnitte 5a und 5b miteinander verbindet. Dadurch werden die Ableitelemente 2 bei der Verschiebebewegung radial nach außen in Richtung auf den Grundkörper 1 verschoben. Hierbei werden die Gelenkarme 7 elastisch verformt, wobei die Kontaktteile 3 der Ableitelemente 2 radial nach außen bewegt werden. Sobald die Einbaulage auf dem Abschnitt 5b erreicht ist, sind die Kontaktteile 3 der Ableitelemente 2 am weitesten radial nach außen verschoben.

Da die Gelenkarme 7 elastisch verformt werden, üben sie eine radiale Anpresskraft auf die Kontaktteile 3 aus. Aufgrund des Anpressdruckes können die elektrischen Ladungen sicher vom Maschinenelement 5 aufgenommen und an einen geerdeten Teil weitergeleitet werden, wodurch die anliegende Spannung zumindest reduziert wird.

Da die Gelenkarme 7 jeweils in Richtung auf die Durchtrittsöffnung 10 gebogen verlaufen, verformen sich die Gelenkarme 7 in Richtung zueinander, wodurch der Kontaktteil 3 gleichmäßig radial nach außen in Richtung auf den Grundkörper 1 bewegt wird.

Die Vertiefungen 8 stellen sicher, dass die Gelenkarme 7 zuverlässig elastisch gebogen werden können. Die in Umfangsrichtung gemessene Dicke der Gelenkarme 7 ist so gewählt, dass sie einerseits sicher elastisch verformt werden können, andererseits aber in der verformten Lage einen ausreichend hohen Radialdruck auf die Kontaktteile 3 ausüben. Der auf diese Weise erzeugte Anpressdruck begünstigt die Ableitung der elektrischen Ladungen vom Maschinenelement 5.

Wie aus **Fig. 4** hervorgeht, haben die Gelenkarme 7 rechteckigen Querschnitt, wobei die axiale Länge La größer ist als die Dicke d (Fig. 5). Durch diese Formgestaltung wird gewährleistet, dass sich die Gelenkarme 7 nur radial bewegen können, axiale Bewegungen hingegen verhindert oder in einem nur geringen Ausmaß zugelassen werden.

Die Kontaktfläche 4 der Kontaktteile 3 hat rechteckigen Umriss (Fig. 4 und 5) und kann als glatte Fläche ausgebildet sein.

Die **Fig. 4** **und** **5** zeigen die Möglichkeit, an der Kontaktfläche 4 Strukturen vorzusehen, um beispielsweise Medien, wie Öl, aus dem Kontaktbereich zwischen dem Ableitkörper und dem Maschinenelement 5 wegzufördern oder auch aktiv einen Ölfilm aufzubauen, um einen hydrodynamischen Zustand herbeizuführen, wie dies beispielsweise bei Gleitringdichtungen bekannt ist. Der Ölfilm trägt die Last der beiden Oberflächen und verhindert direkten Kontakt, wodurch Reibung und Verschleiß stark reduziert werden. Zudem kann, wenn das Fluid elektrisch leitend ist, die Ableitung der Ladung weiterhin stattfinden. Wenn das Fluid ein nichtleitendes Medium ist, kann eine kapazitive Kopplung zwischen dem Maschinenelement 5 und der Kontaktfläche 4 vorgesehen sein, wobei die Kontaktflächen 4 mit geeigneten Beschichtungen versehen sind, was nachfolgend noch erläutert wird.

Je nach Einsatzfall können diese unterschiedlichen Strukturen gemeinsam an der Kontaktfläche 4 vorgesehen sein. Es besteht aber auch die Möglichkeit, an der Kontaktfläche 4 nur die Strukturen zum Entfernen der Medien aus dem Kontaktbereich oder nur Strukturen zum Aufbau eines Ölfilmes anzubringen.

Als Beispiel sind auf der Kontaktfläche 4 der Kontaktteile 3 V-förmige Strukturen 16 vorgesehen, die in halber axialer Breite der Kontaktfläche 4 eine Spitze 17 haben. Die Strukturen 16 sind in Umfangsrichtung entgegengesetzt zueinander angeordnet, d.h. die einen V-förmigen Strukturen weisen in die eine und die anderen V-Strukturen in die andere Umfangsrichtung des Ableitkörpers. Diese Strukturen werden vorteilhaft durch rippenartige Erhöhungen gebildet, können aber auch durch entsprechende Vertiefungen in der Kontaktfläche 4 gebildet sein. Die Strukturen 16 erstrecken sich bis zu den Seitenflächen 18, 19 des Kontaktteiles 3. Dadurch sind die Strukturen 16 über die axiale Bereite des Kontaktteiles 3 wirksam. Um eine gleichmäßige Wirkung zu erreichen, sind die Strukturen 16 vorteilhaft spiegelsymmetrisch zueinander angeordnet.

Infolge der V-förmigen Ausbildung der Strukturen 16 wird erreicht, dass Medium, das unter die Kontaktteile 3 gelangt ist, axial nach außen geleitet wird. Auf diese Weise wird gewährleistet, dass die Kontaktfläche 4 zur einwandfreien Ableitung der Ladungen sauberen Kontakt mit dem Maschinenelement 5 hat. Grundsätzlich sind bei dieser Ausführungsform alle Kontaktflächen 4 mit den Strukturen 16 versehen. Es besteht aber auch die Möglichkeit, die Strukturen 16 beispielsweise nur an jedem zweiten Kontaktteil 3 vorzusehen.

Die beschriebenen Ausführungsbeispiele gemäß den Fig. 1 bis 5 haben den Vorteil, dass Zusatzelemente, die einen weiteren Montageschritt erfordern, nicht vorhanden sind. Die Gelenkarme 7 sorgen dafür, dass die Kontaktteile 3 bei der Montage radial nach außen bewegt werden, wodurch infolge der elastischen Verformung die Gelenkarme 7 einen ausreichend hohen Anpressdruck der Kontaktteile 3 an das Maschinenelement 5 gewährleisten.

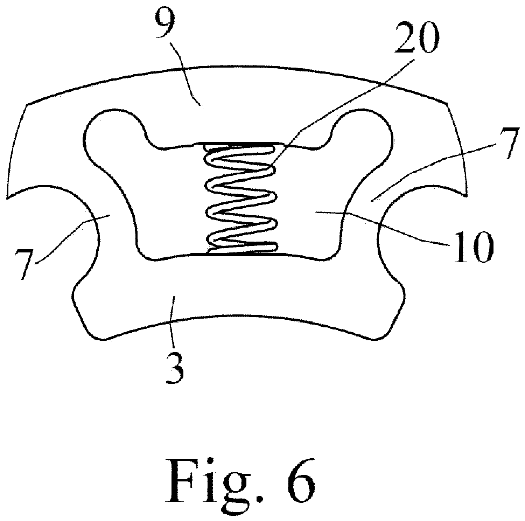

**Fig. 6** zeigt nun die Möglichkeit, den Anpressdruck des Kontaktteiles 3 auf das Maschinenelement 5 durch Einsatz wenigstens eines Druckelementes 20 zu erhöhen. Es befindet sich in der Durchtrittsöffnung 10 und stützt sich mit einem Ende am Steg 9 und mit dem anderen Ende am Kontaktteil 3 ab. Vorteilhaft erstreckt sich das Druckelement 20 in radialer Richtung und ist mittig in der Durchtrittsöffnung 10 angeordnet, bezogen auf die Umfangsbreite des Steges 9 bzw. des Kontaktteiles 3. Infolge dieser mittigen Lage wird der Kontaktteil 3 in der Einbaulage zuverlässig gegen das Maschinenelement 5 radial belastet.

Das Druckelement 20 ist vorteilhaft so ausgebildet, dass es nicht seitlich über die Kontaktteile 3 vorsteht. Dann wird die axiale Breite des Ableitkörpers durch die Druckelemente 20 nicht vergrößert.

Die Druckelemente 20 können für jeden Kontaktteil 3 vorgesehen sein. Ausreichend ist es aber auch, wenn beispielsweise nur jeder zweite Kontaktteil 3 durch ein solches Druckelement 20 radial belastet wird.

Da das Druckelement 20 mittig in der Durchtrittsöffnung 10 angeordnet ist, hat es ausreichenden Abstand von den Gelenkarmen 7, so dass deren elastische Verformung beim Einschieben des Maschinenelementes 5 in den Ableitkörper nicht beeinträchtigt wird.

Als Druckelement 20 kommen beispielsweise Metalldruckfedern, zylindrische Metallfedern, metallische Formfedern und dgl. in Betracht.

Das Druckelement 20 kann nicht nur aus metallischem Werkstoff, sondern auch aus einem entsprechend elastisch verformbaren Kunststoff bestehen.

Bei einer weiteren (nicht dargestellten) Ausführungsform kann das Druckelement 20 im Gelenkarm 7 angeordnet sein. In diesem Falle wird das Druckelement 20 mit entsprechendem Kunststoff umspritzt, so dass es von außen nicht sichtbar ist.

Ferner kann das Druckelement 20 temperaturabhängige Eigenschaften aufweisen. Mit steigender Temperatur nimmt das Elastizitätsmodul ab, wodurch das Druckelement 20 weicher wird und mit weniger Kraft den Kontaktteil 3 an das Maschinenelement 5 anpresst. Somit kann ein einfacher Überlastschutz bewirkt werden.

Alternativ kann auch ein Material mit Formgedächtniseigenschaften, wie beispielsweise Nitinol (Nickel-Titan-Legierung) hierzu Anwendung finden, bei denen das Druckelement 20 seine Form in Abhängigkeit von der Temperatur ändert.

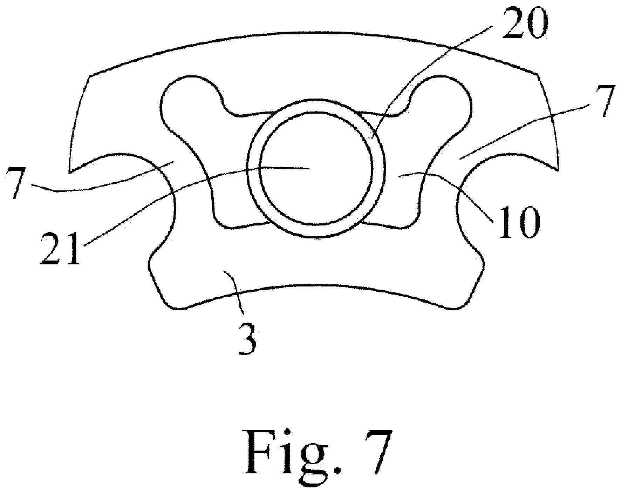

Bei der Ausführungsform nach **Fig. 7** wird das Druckelement 20 durch einen zylindrischen, vorzugsweise hohlzylindrischen Köper gebildet, der beispielsweise aus Metall oder einem elastischen, vorzugsweise elastomerem Werkstoff bestehen kann. Es sind aber auch andere geeignete Geometrien denkbar.

Das Druckelement 20 ist so in der Durchtrittsöffnung 10 angeordnet, dass seine Achse 21 parallel zur Achse des Ableitkörpers verläuft.

Das Druckelement 20 ist in der Durchtrittsöffnung 10 in geeigneter Weise axial gesichert, so dass es sich bei der Montage und beim Einsatz des Grundkörpers 1 nicht von / aus diesem lösen kann.

Das Druckelement 20 hat einen solchen Außendurchmesser, dass es in der Einbaulage des Grundkörpers 1 elastisch zusammengedrückt wird, so dass es auf den Kontaktteil 3 eine entsprechende zusätzliche Radialkraft ausübt.

Das Druckelement 20 ist entsprechend der vorigen Ausführungsform mittig in der Durchtrittsöffnung 10 angeordnet und hat einen solchen Abstand von den Gelenkarmen 7, dass diese bei ihrer elastischen Verformung nicht durch das Druckelement 20 behindert werden können. Es hat eine solche Länge, dass es nicht oder allenfalls nur in geringem Maße axial über den Grundkörper 1 vorsteht.

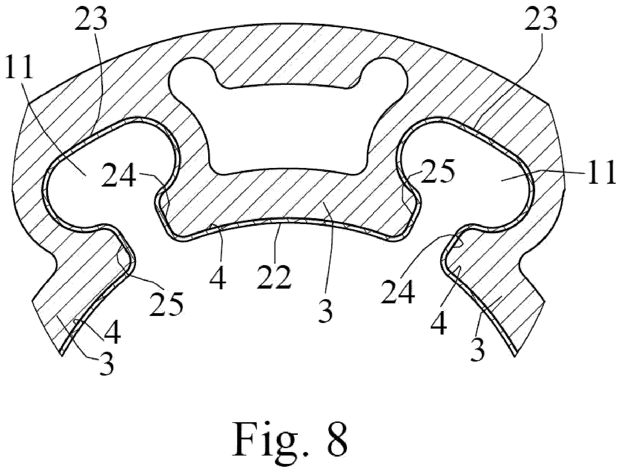

**Fig. 8** zeigt die Möglichkeit, an der Innenseite des Grundkörpers 1 eine Folie 22 anzubringen. Sie kann leitfähig oder nicht leitfähig ausgebildet sein.

Die Folie 22 deckt die Kontaktflächen 4 der Kontaktteile 3 ab. Auch die Wandung 23 der Durchtrittsöffnungen 11 sowie die in Umfangsrichtung weisenden Stirnseiten 24, 25 der Kontaktteile 3 sind durch die Folie 22 bedeckt. Auf diese Weise ist die gesamte Innenseite des Grundkörpers 1 durch die Folie 22 abgedeckt.

Bei Verwendung einer leitfähigen Folie 22 wird der Kontaktwiderstand verringert, wenn die Folie eine höhere Leitfähigkeit als das Basismaterial des Ableitkörpers bzw. des Grundkörpers 1 aufweist. Solche Folien bestehen beispielhaft aus einem Metall, wie Kupfer, Aluminium, oder einem elektrisch leitfähigen Polymer, wie beispielsweise Polyanilin, Polythiophen oder Polypyrrol, oder einem elektrisch leitfähigen Gummi oder aus einer Graphitfolie oder einer metallisierten Kunststofffolie.

Als Folie 22 kann auch eine nicht leitfähige (dielektrisch wirksame) Folie eingesetzt werden, die zum Beispiel aus PTFE besteht und einen Kondensator bzw. eine funktional wirksame kapazitive Kopplung realisiert, wobei diese einen wirkungsvollen Abbau der elektrischen Spannung vom Maschinenelement 5 erreicht. Diese Wirkungsweise ist in der DE 20 2023 103 968 U1 beschrieben, auf die ausdrücklich Bezug genommen und durch den Verweis einbezogen wird.

Es sind auch mehrerer folienartige Schichten zum Aufbau einer wirksamen kapazitiven Kopplung denkbar, zum Beispiel abwechselnd leitfähige und nichtleitfähige (dielektrisch wirksame) folienartige Schichten.

Abweichend vom dargestellten Ausführungsbeispiel kann die Folie 22 auch nur auf der Kontaktfläche 4 der Kontaktteile 3 vorgesehen sein.

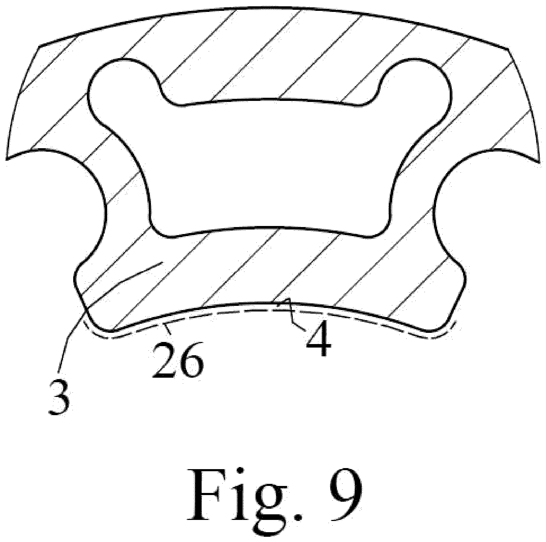

Der Grundkörper 1 kann auch mit einer Beschichtung 26 versehen sein **(****Fig. 9****),** die zumindest die Kontaktfläche 4 des Kontaktteiles 3 bedeckt. Die Beschichtung 26 kann aber auch vollumfänglich vorgesehen sein, wie dies anhand von Fig. 8 für die Folie 22 dargestellt und beschrieben ist.

Wenn die Beschichtung 26 aus elektrisch leitfähigem Material besteht, lässt sich dadurch der Kontaktwiderstand zwischen dem Kontaktteil 3 und dem Maschinenelement 5 verringern. Für solche leitfähigen Beschichtungen kommen z.B. Silberlack, Graphit oder allgemein leitfähige Lacke in Betracht.

Die Beschichtung 26 kann aber auch aus nichtleitfähigem Material bestehen, z.B. aus DLC, Keramik oder PTFE. In diesem Falle wird ein Kondensator bzw. eine kapazitiv wirksame Kopplung erzeugt, der ebenfalls zu einer Reduzierung der Spannung von dem Maschinenelement 5 beiträgt.

Gute Ableiteigenschaften werden vorteilhaft erreicht, wenn die Schichtdicke kleiner 1 µm oder in einem Bereich zwischen etwa einem 1 µm bis etwa 10 µm liegt. Eine maximale Ableitung oder auch kapazitive Kopplung wird erreicht, wenn die Schichtdicke zwischen etwa 10 und 100 µm liegt. Derartige Beschichtungen können mittels Physical Vapor Deposition (PVD) und/oder Chemical Vapor Deposition (CVD) aufgebracht werden. Denkbar sind auch Verfahren wie thermisches Spritzen oder Sol-Gel-Verfahren.

Wenn die Beschichtung 26 aus einem harten Material besteht, wie etwa DLC, aus Hartmetall oder Keramik, dann hat die Beschichtung 26 eine hohe Verschleißfestigkeit, so dass der Verschleiß der Beschichtung 26 im Einsatz des Ableitkörpers minimiert werden kann.

Darüber hinaus kann die Beschichtung 26 auch schmierende Eigenschaften haben, was ebenfalls zu einer Verschleißminimierung und insbesondere zu einem geringen Reibverschleiß führt. Geeignete Materialien für eine derartige Beschichtung sind beispielsweise Graphit oder graphenhaltige Werkstoffe.

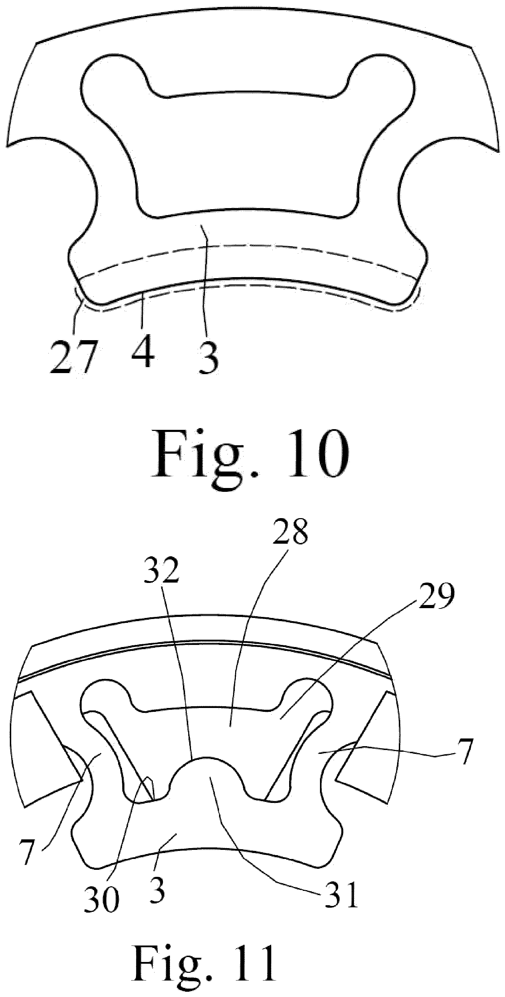

Bei der Ausführungsform nach **Fig. 10** ist der Kontaktteil 3 im Bereich seiner Kontaktfläche 4 derart modifiziert, dass unterschiedliche Eigenschaften im Kontaktbereich erreicht werden.

**Fig. 10** zeigt mit gestrichelten Linien beispielhaft einen Bereich 27 mit einer Randschichthärtung. So kann an der Kontaktfläche 4 eine Randschichthärtung durch eine entsprechende Wärmebehandlung des Ableitkörpers erreicht werden. Diese Randschichthärtung erstreckt sich von der Kontaktfläche 4 ausgehend über einen bestimmten Dickenbereich in den Kontaktteil 3 hinein, was durch die gestrichelte Linie schematisch angezeigt ist. Es ist weiter möglich, verschleißfeste Partikel, wie Glasfasern, Glaskugeln, Keramiken, Glaskohle und dgl., in den Randbereich 27 einzubringen. Sowohl die Randschichthärtung als auch die Einlagerung der verschleißfesten Partikel führt zu einer hohen Verschleißfestigkeit des Kontaktteiles 3.

Weiter können in den Kontaktteil 3 hochleitfähige Partikel in erhöhter Konzentration eingebracht werden, um dadurch eine verringerte Impedanz zu erreichen. Solche leitfähigen Partikel sind beispielsweise Silberpartikel, Kupferpartikel oder allgemein metallische Partikel.

Weiter können im Bereich 27 Festschmierstoffe eingebracht sein, die vorteilhaft aus leitfähigem Material bestehen, wie Graphit, Graphen, Molybdänsulfid, Edelmetalle und dgl.

Als Festschmierstoffe kommen auch nichtleitfähige Bestandteile in Betracht, wie PTFE, Keramiken und dgl., die in den Kontaktteil 3 zur Bildung des Bereiches 27 eingebracht werden.

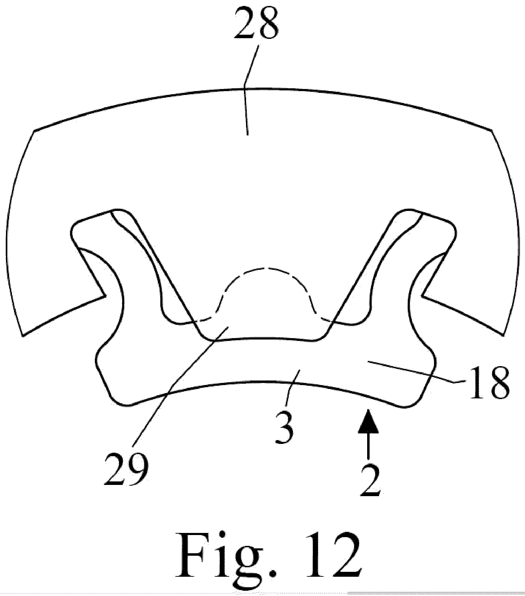

**Die** **Fig. 11** und **12** zeigen beispielhaft die Möglichkeit, axiale Auslenkungen der Gelenkarme 7 zu verhindern. Dadurch wird verhindert, dass beim Einschieben des Maschinenelementes 5 die Ableitelemente 2 axial mitgezogen und/oder axial gebogen werden. Ein solches Sicherungselement 28 ist beispielhaft ein Trägerteil, insbesondere ein Trägerblech, das den ringförmigen Grundkörper 1 übergreift. Das Sicherungselement 28 hat in Höhe des Ableitelementes 2 eine radial nach innen vorstehende Zunge 29, die vorteilhaft an der Seitenfläche 18 oder 19 des Kontaktteiles 3 anliegt. Die Zunge 29 kann auch geringen axialen Abstand vom Kontaktteil 3 haben. Unter geringem axialem Abstand ist zu verstehen, dass beim Einschieben des Maschinenelementes 5 die Kontaktteile 3 allenfalls in vernachlässigbarer Weise eine Axialbewegung ausführen.

Zur Verbesserung des Auslenkschutzes sind die Kontaktteile 3 an ihrer radialen Außenseite 30 mit einem radial nach außen verlaufenden Vorsprung 31 versehen, der, in Achsrichtung des Grundkörpers 1 gesehen, von der Zunge 29 übergriffen wird. Der Vorsprung 31 ist in halber Umfangslänge des Kontaktteiles 3 vorgesehen und vorteilhaft mit einer gerundeten Außenseite 32 versehen.

Der Vorsprung 31 hat umfangsseitigen Abstand von den Gelenkarmen 7, so dass diese ungehindert durch den Vorsprung 31 beim Einschieben des Maschinenelementes 5 elastisch verformt werden können.

Da sich die Zunge 29 im Bereich der Gelenkarme 7 axial neben ihnen befindet, wird die Verformungsbewegung der Gelenkarme 7 durch die Zunge 29 ebenfalls nicht beeinträchtigt.

Beim Einschieben des Maschinenelementes 5 in die zentrale Öffnung 13 des Grundkörpers 1 (s. a. Fig. 3) befinden sich die für jedes Kontaktteil 3 vorgesehenen Sicherungselemente 28 am Grundkörper 1. Während des Montagevorganges werden die Ableitelemente 2 in der beschriebenen Weise radial nach außen bewegt, wobei die Gelenkarme 7 elastisch verformt werden. Hierbei stellen die Sicherungselemente 28 sicher, dass eine Axialbewegung der Ableitelemente 2 vermieden wird.

Es besteht die Möglichkeit, die Sicherungselemente 28 lösbar mit dem Grundkörper 1 zu verbinden. Dann können sie vom Grundkörper 1 abgenommen werden, wenn die Einbaulage erreicht ist.

Das Sicherungselement 28 kann auch so ausgebildet sein, dass es zwei oder mehr Zungen 29 aufweist, so dass mit einem Sicherungselement 28 gleichzeitig zwei oder mehr Ableitelemente 2 gegen Axialbewegungen gesichert werden können.

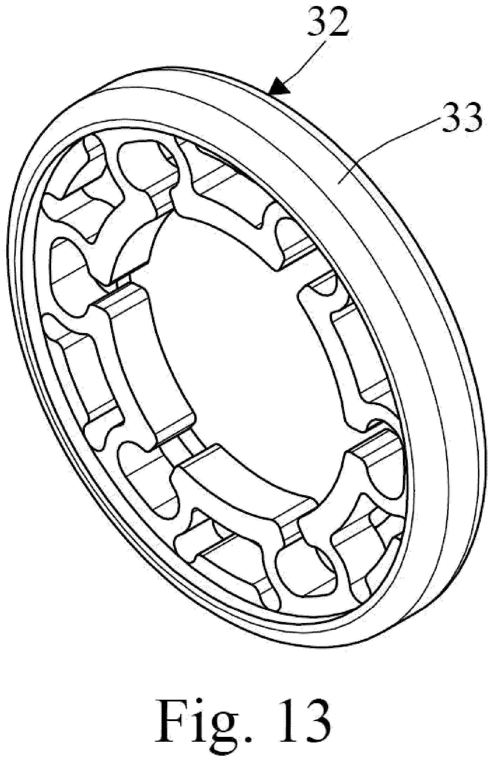

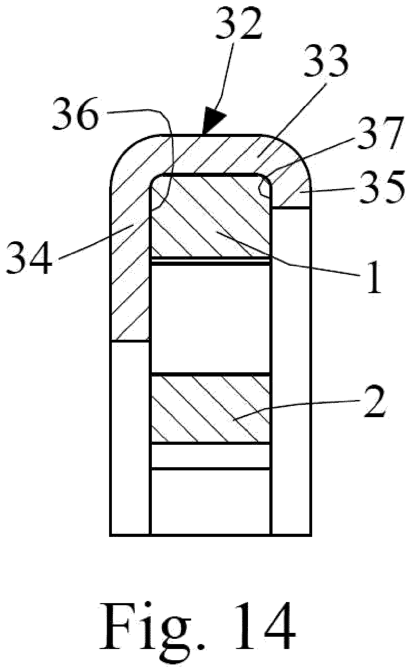

Die **Fig. 13** **und** **14** zeigen die Möglichkeit, den Grundkörper 1 mit Hilfe eines Versteifungselementes 32 zur Montage in einem Gehäuse zu versteifen. Das Versteifungselement 32 hat einen Ringkörper 33, der im Wesentlichen u-förmig ausgebildet ist und einen langen Schenkel 34 und einen kurzen Schenkel 35 aufweist. Die beiden Schenkel 34, 35 liegen an Seitenflächen 36, 37 des Grundkörpers 1 an.

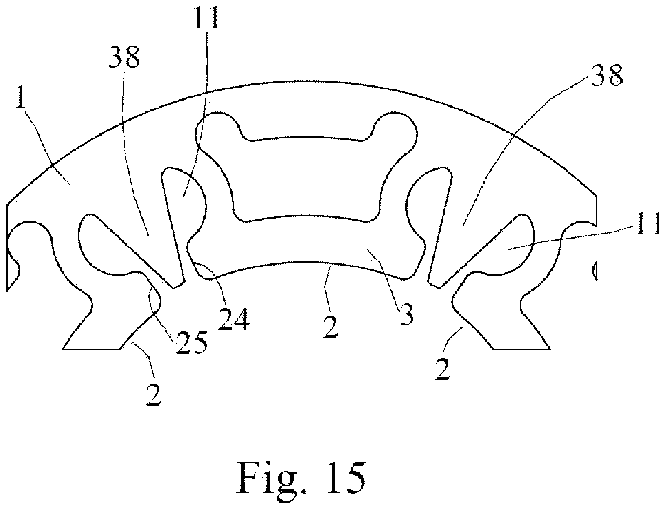

Der lange Schenkel 34 ragt radial nach innen über den ringförmigen Grundkörper 1 vor und endet mit Abstand von den Ableitelementen 2, in einer Radialansicht gemäß Fig. 15 gesehen. Der Radialabstand ist so groß, dass die Ableitelemente 2 beim Montagevorgang ungehindert radial nach außen bewegt werden können.

Der kurze Schenkel 35 des Versteifungselementes 32 erstreckt sich nur über einen Teil der radialen Dicke des Grundkörpers 1.

Das Versteifungselement 32 besteht vorteilhaft aus einem metallischen Material, vorzugsweise aus einem entsprechend geformten Blech.

Das Versteifungselement 32 kann auch aus einem leitfähigen, eine Versteifungsfunktion ermöglichenden harten Kunststoff bestehen.

Zwischen den Ableitelementen 2 können Abstreifer 38 vorgesehen sein **(****Fig. 15****),** die vom ringförmigen Grundkörper 1 radial nach innen abstehen. Sie durchsetzen die Durchtrittsöffnungen 11 zwischen den benachbarten Ableitelementen 2 und ragen mit ihrem radial inneren Ende zwischen benachbarte Ableitelemente 2 derart, dass sie in Umfangsrichtung Abstand von den Stirnseiten 24, 25 der Kontaktteile 3 haben.

Die Abstreifer 38 verjüngen sich in Richtung auf ihr freies Ende in vorteilhafter Weise stetig. Sie sind so vorgesehen, dass sie die radiale Verstellbarkeit der Ableitelemente 2 bzw. der Kontakteile 3 beim Montagevorgang nicht behindern.

Die Abstreifer 38 haben eine solche radiale Länge, dass sie in der Einbaulage des Grundkörpers 1 am Maschinenelement 5 anliegen. Dann können sie eventuelle Verschmutzungen oder Medien vom rotierenden Maschinenelement 5 abstreifen. Die Abstreifer 28 haben vorteilhaft gleiche Breite wie der gesamte Grundkörper 1, so dass sie axial nicht über die Seiten des Grundkörpers 1 vorstehen.

Die Abstreifer 38 können aber auch so am Grundkörper 1 vorgesehen sein, dass sie schräg zum Maschinenelement 5 angestellt sind. Auch in diesem Falle ist eine wirkungsvolle Abstreifwirkung gewährleistet. Die Abstreifer 38 sind vorteilhaft einstückig mit dem Grundkörper 1 ausgebildet, so dass er in einem Arbeitsgang ohne zusätzliche Montageschritte hergestellt werden kann.

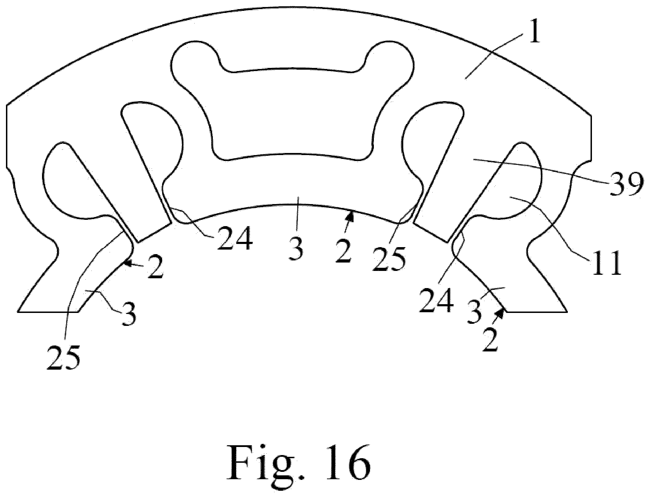

Das Ausführungsbeispiel nach **Fig. 16** zeigt die Möglichkeit, ein Verdrehen des Grundkörpers 1 in tangentialer Richtung zu verhindern. Dies kann z.B. bei einer Vereisung des Maschinenelementes 5 oder ähnlichen Bedingungen, wie Verschmutzung, Eindringen von Fremdkörpern oder Bildung von Ablagerungen auftreten, die ebenfalls die Funktion beeinträchtigen können.

Der bereits beschriebene Überlastschutz durch die Druckelemente 20 kann helfen, die Auswirkungen solcher Probleme zu mindern.

Vom Grundkörper 1 stehen radial nach innen Verdrehsicherungselemente 39 ab, die die Durchtrittsöffnungen 11 durchsetzen und zwischen die benachbarten Kontaktteile 3 der Ableitelemente 2 ragen. Die Verdrehsicherungselemente 39 haben nur geringen Abstand von den Stirnseiten 24, 25 der Kontaktteile 3, der so groß ist, dass die Radialbewegung der Kontaktteile 3 bei der Montage nicht beeinträchtigt wird.

In der Einbaulage haben die Verdrehsicherungselemente 39 Abstand vom Maschinenelement 5. Durch sie kann ein tangentiales Mitschleppen der Ableitelemente 2 zumindest erheblich verringert, vorteilhaft verhindert werden. Die Verdrehsicherungselemente 39 sind in vorteilhafter Weise einstückig mit dem Ableitkörper ausgebildet und haben in vorteilhafter Weise gleiche axiale Breite wie der Grundkörper 1 und die Ableitelemente 2.

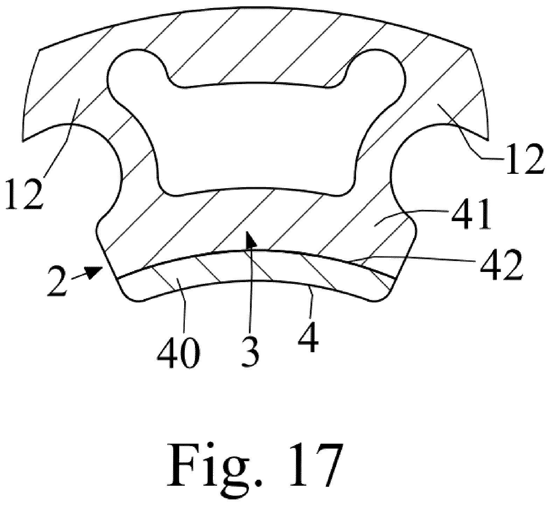

Bei der Ausführungsform gemäß **Fig. 17** besteht der Kontaktteil 3 aus zwei unterschiedlichen Materialien. Der Teil 40 mit der Kontaktfläche 4 besteht aus einem Material, mit dem beispielsweise gute Verschleißeigenschaften und/oder hohe elektrische Leitfähigkeit bzw. geringer Übergangswiderstand zum Maschinenelement 5 und/oder geringe Reibung erreicht werden.

Der andere Teil 41 des Kontaktteiles 3 besteht aus einem Material mit guten elastischen Eigenschaften. Insbesondere die Gelenkstellen 12 profitieren von einem solchen Material.

Für den Teil 40 kommen als Materialen beispielhaft Kupferlegierungen, wie Kupfer-Beryllium (BeCu) oder auch Graphit und Graphitverbindungen, sowie Glaskohle oder Polytetrafluorethylen (PTFE) in Frage und für den Teil 41 beispielhaft Glaskohle, Graphit oder Metall-Legierungen mit hoher elektrischer Leitfähigkeit in Betracht. Es können auch elektrisch leitfähige Polymere, wie beispielsweise Polyanilin, Polythiophen oder Polypyrrol, PTFE, oder ein elektrisch leitfähiger Gummi, Verwendung finden. Diese Materialien gewährleisten eine effiziente und gleichmäßige Ableitung der Spannungen oder Ladungen, wie sie für den beschriebenen Teil 41 erforderlich sind.

Die beiden Teile 40 und 41 können in jeder geeigneten Weise miteinander verbunden sein, vorzugsweise durch eine Klebeverbindung 42. Auch eine formschlüssige Schnapp- bzw. Steckverbindung kann effektiv und zuverlässig eingesetzt werden, um die Montageeffizienz zu verbessern und die Produktleistung zu optimieren.

Bei Elastomeren können die beiden Teile 40, 41 durch eine Anvulkanisation bzw. bei Thermoplasten in einem Um/Anspritzvorgang miteinander verbunden werden.

Der Teil 40 hat über seine Umfangslänge und seine axiale Breite vorteilhaft gleiche Dicke. Sie wird so gewählt, dass über die Lebensdauer des Ableitkörpers der Teil 40 stets eine ausreichende Dicke aufweist.

### Bezugszeichenliste

1 Grundkörper
2 Ableitelement
3 Kontaktteil
4 Kontaktfläche
5 Maschinenelement
6 Achse
7 Gelenkarm
8 Vertiefung
9 Steg
10 Durchtrittsöffnung
11 Durchtrittsöffnung (zwischen benachbarten Ableitelementen)
12 Gelenkstelle
13 Zentrale Öffnung
14 Pfeilrichtung (Verschieberichtung)
15 Kegelfläche
16 V-förmige Strukturen
17 Spitze (der V-förmigen Strukturen)
18 Seitenfläche (Kontaktteil)
19 Seitenfläche (Kontaktteil)
20 Druckelement
21 Achse (des Druckelements)
22 Folie
23 Wandung (Durchtrittsöffnung)
24 Stirnseite (Kontaktteil)
25 Stirnseite (Kontaktteil)
26 Beschichtung
27 Bereich (mit Randschichthärtung)
28 Sicherungselement
29 Zunge (des Sicherungselements)
30 Radiale Außenseite (Kontaktteil)
31 Vorsprung (Kontaktteil)
32 Außenseite (des Vorsprungs)
33 Ringkörper (Versteifungselement)
34 Langer Schenkel (des Versteifungselements)
35 Kurzer Schenkel (des Versteifungselements)
36 Seitenfläche (des Grundkörpers)
37 Seitenfläche (des Grundkörpers)
38 Abstreifer
39 Verdrehsicherungselement
40 Teil mit Kontaktfläche (Material mit guten Verschleißeigenschaften und/oder hoher elektrischer Leitfähigkeit)
41 Teil des Kontaktteiles (Material mit guten elastischen Eigenschaften)
42 Klebeverbindung

## Patentansprüche

1. Ableitkörper für ein Wellenerdungselement, mit einem ringförmigen Grundkörper (1), der mindestens ein Ableitelement (2) aufweist, das mit einer Kontaktfläche (4) versehen ist,
**dadurch gekennzeichnet, dass** das Ableitelement (2) mit dem Grundkörper (1) über wenigstens einen Gelenkarm (7) derart verbunden ist, dass das Ableitelement (2) nur radial gegenüber dem Grundkörper (1) beweglich ist.

2. Ableitkörper nach Anspruch 1,
**dadurch gekennzeichnet, dass** der Gelenkarm (7) über eine Gelenkstelle (12) an den Grundkörper (1) angeschlossen ist.

3. Ableitkörper nach Anspruch 1 oder 2,
**dadurch gekennzeichnet, dass** der Gelenkarm (7) in einer Radialebene des Grundkörpers (1) elastisch biegbar ist.

4. Ableitkörper nach einem der Ansprüche 1 bis 3,
**dadurch gekennzeichnet, dass** der Gelenkarm (7) über seine Länge gekrümmt verläuft.

5. Ableitkörper nach einem der Ansprüche 1 bis 4,
**dadurch gekennzeichnet, dass** der Gelenkarm (7) einstückig mit dem Grundkörper (1) ausgebildet ist.

6. Ableitkörper nach einem der Ansprüche 1 bis 5,
**dadurch gekennzeichnet, dass** der Gelenkarm (7) einstückig mit dem Ableitelement (2) ausgebildet ist.

7. Ableitkörper nach einem der Ansprüche 1 bis 6,
**dadurch gekennzeichnet, dass** das Ableitelement (2) einen blockförmigen Kontaktteil (3) aufweist, an den der Gelenkarm (7) anschließt.

8. Ableitkörper nach Anspruch 7,
**dadurch gekennzeichnet, dass** der Kontaktteil (3) mit der Kontaktfläche (4) versehen ist.

9. Ableitkörper nach einem der Ansprüche 1 bis 8,
**dadurch gekennzeichnet, dass** das Ableitelement (2) sich in Umfangsrichtung des Grundköpers (1) erstreckt.

10. Ableitkörper nach einem der Ansprüche 1 bis 9,
**dadurch gekennzeichnet, dass** das Ableitelement (2) über zwei Gelenkarme (7) an den Grundköper (1) angebunden ist.

11. Ableitkörper nach Anspruch 10,
**dadurch gekennzeichnet, dass** die beiden Gelenkarme (7) entgegengesetzt zueinander über ihre Länge gekrümmt verlaufen.

12. Ableitkörper nach einem der Ansprüche 1 bis 11,
**dadurch gekennzeichnet, dass** der Grundkörper (1) und/oder das Ableitelement (2) und/oder der Gelenkarm (7) derart gleiche axiale Breite haben, dass ihre Seitenflächen jeweils in einer Radialebene (R1, R2) des Grundkörpers (1) liegen.

13. Ableitkörper nach einem der Ansprüche 1 bis 12,
**dadurch gekennzeichnet, dass** die Kontaktfläche (4) mit Strukturen (16) zum Abstreifen von Medien aus dem Kontaktbereich und/oder zum Aufbau eines Mediumfilms im Kontaktbereich versehen ist.

14. Ableitkörper nach einem der Ansprüche 1 bis 13,
**dadurch gekennzeichnet, dass** das Ableitelement (2) durch wenigstens ein zusätzliches Druckelement (20) in Radialrichtung belastet ist.

15. Ableitkörper nach Anspruch 14,
**dadurch gekennzeichnet, dass** sich das Druckelement (20) am Grundkörper (1) und am Ableitkörper (2) abstützt.
